# EUROPEAN PATENT APPLICATION

(11) **EP 4 700 926 A1**
(43) Date of publication of application: **25.02.2026**
(21) Application number: 25190749.9
(22) Date of filing: 21.07.2025
(51) Int. Cl.: H01M 50/107, H01M 50/184, H01M 50/186, H01M 50/188, H01M 50/193, H01M 50/198, H01M 50/559

(54) **SECONDARY BATTERY AND BATTERY PACK**

(30) Priority: 19.08.2024 CN 202422010376 U
(71) Applicant: AESC Japan Ltd., Yokohama-Shi, Kanagawa 220-0012 (JP)
(72) Inventor: YANG, Yaping, Jiangyin City, Wuxi City, 214443 (CN)
(74) Representative: Becker, Eberhard

(57) **Abstract**

A secondary battery (100) includes a housing (110), an electrode assembly (120), an electrode terminal (140), and a sealing member (150). The housing (110) includes an end wall (111) and a side wall (112) surrounding the end wall (111), and the end wall (111) is provided with an electrode terminal hole (1111). The electrode assembly (120) is arranged in the housing (110). The electrode terminal (140) passes through the end wall (111) and is electrically connected to the electrode assembly (120). The sealing member (150) is located between the electrode terminal (140) and the end wall (111). A compression ratio w of the sealing member (150) is in a range of: 20%≤w≤50%. The technical problem of lowered sealing performance of the sealing member (150) between the electrode terminal (140) and the housing (110) under the influence of temperature rise is improved.

## Description

### BACKGROUND

### Technical Field

The disclosure relates to the technical field of batteries, and in particular, relates to a secondary battery and a battery pack.

### Description of Related Art

Regarding cylindrical batteries, at present, due to advantages such as mature production technology, high yield rate, low processing costs, and favorable safety performance, and heat dissipation performance, cylindrical batteries are widely used in various industries.

Generally, between the electrode terminal and the housing of a cylindrical battery of the related art, insulation is achieved through an insulating member, and sealing is accomplished through a sealing member. When the temperature of the cylindrical battery rises, the insulating member experiences thermal shrinkage, so the slit between the electrode terminal and the housing expands, and the sealing ring rebounds. Sealing performance of the sealing member is thus lowered, and in severe cases, leakage may occur.

### SUMMARY

In view of the abovementioned shortcomings of the related art, the disclosure provides a secondary battery and a battery pack, so as to improve the technical problem of lowered sealing performance of a sealing member between an electrode terminal and a housing under the influence of temperature rise.

To achieve the above and other related purposes, the disclosure provides a secondary battery including a housing, an electrode assembly, an electrode terminal, and a sealing member. The housing includes an end wall and a side wall surrounding the end wall, and the end wall is provided with an electrode terminal hole. The electrode assembly is arranged in the housing. The electrode terminal passes through the end wall and is electrically connected to the electrode assembly. The sealing member is located between the electrode terminal and the end wall. A compression ratio w of the sealing member is in a range of: 20%≤w≤50%.

In the above technical solution, the compression ratio of the sealing member is a ratio of a difference between an initial thickness of the sealing member and a thickness of the sealing member after assembly compression to the initial thickness of the sealing member. The compression ratio w of the sealing member is set in the range of 20%≤w≤50%. This setting not only makes the sealing member have an improved sealing effect at normal temperature, but also achieves the effect that when the temperature of the secondary battery rises, even if the sealing member rebounds, favorable sealing performance is still maintained. The technical problem of leakage is thus improved.

In the secondary battery provided by an embodiment of the disclosure, the electrode terminal includes a post portion, an outer flange, and an inner flange. The post portion passes through the electrode terminal hole. The outer flange is located on an outer portion of the housing and extends from the post portion towards an outer periphery of the end wall. The inner flange is located in an inner portion the housing and extends from the post portion towards the outer periphery of the end wall. The sealing member is located between the outer flange and the end wall. In a radial direction of the electrode terminal, a ratio of a width a of a portion of the sealing member clamped between the outer flange and the end wall to a difference between a radius r1 of the outer flange and a radius r2 of the electrode terminal hole is i, where 50%≤i≤90%.

In the above technical solution, because the portion of the sealing member clamped between the outer flange and the end wall directly contacts the outer flange and the end wall and can be directly pressed by the outer flange and the end wall, this portion is an effective sealing portion of a sealing ring. A portion of the difference between the radius r1 of the outer flange and the radius r2 of the electrode terminal hole is a sealable portion that can be used for sealing between the outer flange and the end wall. By setting the ratio i of a length of the effective sealing portion to a length of the sealable portion to 50%≤i≤90%, a placement space is provided for an insulating member and the sealing member is allowed to have a greater effective sealing length, so that the sealing performance of the sealing member is improved.

In the secondary battery provided by an embodiment of the disclosure, a ratio of a difference between the radius r1 of the outer flange 143 and a radius r3 of the post portion 142 to the radius r1 of the outer flange 143 is b, where 30%≤b≤50%.

In the above technical solution, a portion of the difference between the radius r1 of the outer flange and the radius r3 of the post portion is a cantilever portion of the outer flange relative to the post portion. By setting the ratio b in the range of 30%≤b≤50%, a size of the cantilever is shorter, and a larger sealing space is provided for the sealing ring. In this setting, the strength of the cantilever is improved, an edge of the outer flange is not prone to warping, and a more constant pressing force is provided to the sealing member, so that the sealing performance of the sealing member is further improved.

In the secondary battery provided by an embodiment of the disclosure, the secondary battery further includes inner insulator including a first insulator located between the electrode terminal hole and the post portion. In the radial direction of the electrode terminal, a thickness c of the first insulator is in a range of 0.4mm≤c≤0.9mm.

In the above technical solution, the inner insulator is used to isolate the end wall and the electrode assembly, as well as to isolate the end wall and the electrode terminal. The first insulator is mainly used to isolate the end wall and the electrode terminal. By setting the thickness of the first insulator to be equal to or greater than 0.4mm, the pressure resistance performance of the first insulator is improved. Further, by limiting the thickness of the first insulator to be equal to or less than 0.9mm, the effective sealing length of the sealing member is increased, so that the sealing performance of the sealing member is improved.

In the secondary battery provided by an embodiment of the disclosure, in a direction in which the electrode terminal passes through, the first insulator is lower than a side of the electrode terminal hole close to the outer flange and forms a first accommodating groove for accommodating the sealing member. A depth of the first accommodating groove is e, where 0.05mm≤e≤0.2mm.

In the above technical solution, when the compression ratio of the sealing member increases, the corresponding deformation of the sealing member also increases. By arranging of the first accommodating groove, greater deformation of the sealing member is accommodated, so that when high temperature causes the sealing member to rebound, the sealing member still has a higher compression ratio. The depth of the first accommodating groove being equal to or greater than 0.05mm provides a certain accommodating space for the sealing member. The limitation of the depth being equal to or less than 0.2mm achieves an improved isolation and insulation effect of the first insulator between the end wall and the electrode terminal, and the first insulator is allowed to exhibit improved strength.

In the secondary battery provided by an embodiment of the disclosure, in the direction in which the electrode terminal passes through, an inner edge and an outer edge of the first insulator on a side close to the outer flange have different heights.

In the above technical solution, a bottom surface of the first accommodating groove is set as an inclined surface. In this way, the first insulator has a higher height without reducing the accommodating space of the first accommodating groove, and the risk of short circuit is prevented from occurring between the post portion and the end wall when the sealing member is filled unevenly, so that an improved isolation and insulation effect is obtained. In addition, in this setting, the sealing member is allowed to have a higher height in the direction in which the electrode terminal passes through, so that the sealing effect of the sealing member is improved.

In the secondary battery provided by an embodiment of the disclosure, in the direction in which the electrode terminal passes through, a distance from the inner edge to the outer flange is greater than a distance from the outer edge to the outer flange.

In the above technical solution, since a wall thickness of the end wall is relatively thin, a shorter distance from the outer edge of the first insulator to the outer flange is adopted. In this way, a larger contact area between the first insulator and the electrode terminal hole is achieved, so that the pressing between the end wall and the first insulator is stable.

In the secondary battery provided by an embodiment of the disclosure, the secondary battery further includes outer insulator including a second insulator clamped between the outer flange and the end wall. A chamfer is arranged on a side of the second insulator close to the sealing member to form a second accommodating groove for accommodating the sealing member. In the radial direction of the electrode terminal, a length of the chamfer is g, and in the direction in which the electrode terminal passes through, a length of the chamfer is p, where p≥g and 0.2mm≤g≤0.6mm.

In the above technical solution, with the arrangement of the second accommodating groove, a filling space of the sealing member is increased. In addition, by setting the second accommodating groove in the form of a chamfer, the risk of short circuit is prevented from occurring between the outer flange and the end wall when the sealing member is filled unevenly. p≥g means that the length of the chamfer in the radial direction is less than or equal to its length in the axial direction. This setting ensures that when pressure is applied from the outer flange to the second insulator, the second insulator is not easily detached. On one hand, the insulation effect between the outer flange and the end wall is improved, and on the other hand, the improved stability of the outer insulator is also beneficial to the sealing effect of the sealing member. g≥0.2mm means that a maximum depth of the second accommodating groove is greater than or equal to 0.2mm, so that a certain accommodation space is provided for the sealing member. g≤0.6mm means that the maximum depth of the second accommodating groove is less than or equal to 0.6mm. Through this limitation, the second insulator is not easily detached, an improved isolation and insulation effect is provided for the end wall and the outer flange, and the second insulator is allowed to have higher strength.

In the secondary battery provided by an embodiment of the disclosure, in the direction in which the electrode terminal passes through, an inner edge radius of a side of the second insulator where the chamfer is arranged is r4, and in the radial direction of the electrode terminal 140, r1-r4≥0.3mm.

In the above technical solution, first, the inner edge of the side of the second insulator provided with the chamfer is located radially inward of the outer edge of the outer flange, and r1-r4≥0.3mm is further limited. This means that in the radial direction of the electrode terminal, at least 0.3mm width of the second insulator is directly clamped by the outer flange and the end wall. In this setting, the stability of the outer insulator being clamped by the outer flange and the end wall is improved, so on one hand, the insulation effect between the outer flange and the end wall is improved, and on the other hand, the improved stability of the outer insulator is also beneficial to the sealing effect of the sealing member.

In the secondary battery provided by an embodiment of the disclosure, in the direction in which the electrode terminal passes through, a thickness of the second insulator is h, where 0.5mm≤h≤1mm.

In the above technical solution, in this setting of the thickness h≤1mm of the second insulator, the slit between the outer flange and the end wall is decreased, so necessary conditions for improving the compression ratio of the sealing member are provided. The setting of h≥0.5mm ensures that the insulation effect of the second insulator is not affected.

In the secondary battery provided by an embodiment of the disclosure, the outer insulator further includes a third insulator integrally formed with the second insulator. The third insulator is connected to an outer periphery of the second insulator and surrounds an outer periphery of the outer flange. In the radial direction of the electrode terminal, a width of the third insulator is j, where j≥0.5mm.

In the above technical solution, the width j of the third insulator is set to be j≥0.5mm to ensure a sufficient creepage distance.

The disclosure further provides a battery pack, and the battery pack includes the secondary battery according to any one of the above.

In the secondary battery of the disclosure, the compression ratio w of the sealing member is set in the range of 20%≤w≤50%. This setting not only makes the sealing member have an improved sealing effect at normal temperature, but also achieves the effect that when the temperature of the secondary battery rises, even if the sealing member rebounds, favorable sealing performance is still maintained. The technical problem of leakage is thus improved.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a structural schematic view of a secondary battery according to an embodiment of the disclosure.
FIG. 2 is a structural schematic view of an electrode assembly of the secondary battery according to an embodiment of the disclosure.
FIG. 3 is a local enlargement view of a region A of the secondary battery of in FIG. 1 according to an embodiment of the disclosure.
FIG. 4 is a local enlargement view of a region B in FIG. 3.
FIG. 5 is a local enlargement view of the region A of the secondary battery of in FIG. 1 according to another embodiment of the disclosure.
FIG. 6 is a local enlargement view of a region D in FIG. 5.
FIG. 7 is a local enlargement view of a region C in FIG. 5.
FIG. 8 is a schematic view of a battery pack according to an embodiment of the disclosure.
FIG. 9 is a schematic view of an electronic apparatus according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

A secondary battery includes an electrode assembly. The electrode assembly is the component in the secondary battery where electrochemical reactions occur, and one or more terminal assemblies may be included.

The secondary battery also includes a housing, a cover plate, and an electrode terminal. The housing includes an end wall and a side wall surrounding the end wall, and one end of the side wall has an opening. The electrode assembly may be assembled into the housing via the opening of the housing. The cover plate is used to cover the opening of the housing for sealing. The electrode terminal passes through the end wall and is electrically connected to the electrode assembly to conduct the electrical energy generated by the electrode assembly out of the battery.

In order to reduce the risk of short circuit, it is necessary to insulate and isolate the electrode terminal and the end wall, as well as to isolate the electrode assembly and the end wall. In order to reduce the risk of leakage between the electrode terminal and the end wall, an insulating member and a sealing member are usually arranged between the electrode terminal and the end wall.

The inventor has found that in a secondary battery of the prior art, when the temperature rises, the insulating member experiences thermal shrinkage, so a slit between the electrode terminal and the housing expands, and a sealing ring rebounds. Sealing performance of the sealing member is thus lowered, and in severe cases, leakage may occur.

In view of the above, a technical solution is provided by the disclosure to set a compression ratio w of the sealing member within a range of 20%≤w≤50%, so as to improve the technical problem of lowered sealing performance of the sealing member between the electrode terminal and the housing under the influence of temperature rise.

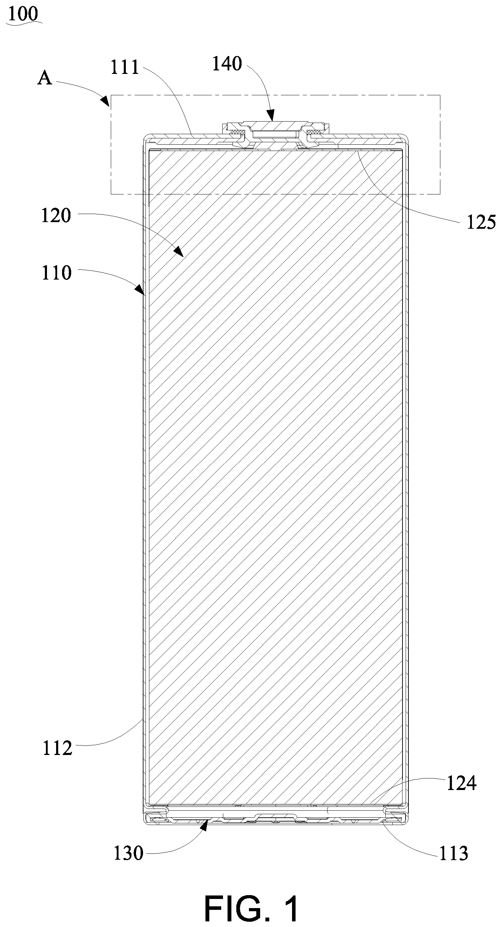

Referring to FIG.1 to FIG.9, the disclosure provides a secondary battery 100 including a housing 110, an electrode assembly 120, an electrode terminal 140, and a sealing member 150.

Referring to FIG.1, the housing 110 includes an end wall 111 and a side wall 112 surrounding the end wall 111. As long as a stable sealing and electrical connection relationship can be formed, the connection between the end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall 112 may also surround the end wall 111 along any other closed loop contour that can match the end wall 111. In the embodiment, an outer edge of the end wall 111 is circular, the side wall 112 surrounds the outer edge of the end wall 111 in a cylindrical shape, and a circular opening 113 is formed at an end of the side wall 112 away from the end wall 111. The housing 110 formed by the end wall 111 and the side wall 112 forms an accommodating cavity for accommodating the electrode assembly 120, electrolyte, and other necessary battery components. Specifically, a diameter of the housing 110 may be determined according to a specific size of the electrode assembly 120, such as 18mm, 21mm, 46mm, etc. The housing 110 can be made of various materials, such as copper, iron, aluminum, steel, aluminum alloy, etc. In order to prevent the housing 110 from rusting during long-term use, a surface of the housing 110 may also be plated with a layer of anti-rust material such as metal nickel.

With reference to FIG. 1 to FIG. 2, the electrode assembly 120 is received in an inner portion of the housing 110, and the electrode assembly 120 is a component in the secondary battery 100 where electrochemical reactions occur. One or a plurality of electrode assemblies 120 may be included within the housing 110. The electrode assembly 120 includes a terminal sheet and a separator 122, and the terminal sheet and the separator 122 are wound to form a wound structure. Specifically, in this embodiment, the electrode assembly 120 includes a positive terminal sheet 121, the separator 122, and a negative terminal sheet 123 wound around the housing 110 in an axial direction.

Referring to FIG.1 to FIG. 2, the positive terminal sheet 121 includes a positive current collector 1211 and a positive active material layer coated on the positive current collector 1211. A first coated region 1212 coated with the positive active material layer and a first uncoated region 1213 without the positive active material layer are formed on the positive current collector 1211. The first coated region 1212 and the first uncoated region 1213 are arranged in the axial direction of the housing 110. The first uncoated region 1213 extends beyond the separator 122 towards one end in a height direction of the secondary battery 100 and is folded towards an axis of the housing 110 to form a stacked positive tab 125.

Referring to FIG.1 to FIG. 2, the negative terminal sheet 123 includes a negative current collector 1231 and a negative active material layer coated on the negative current collector 1231. A second coated region 1232 coated with the negative active material layer and a second uncoated region 1233 without the negative active material layer are formed on the negative current collector 1231. The second coated region 1232 and the second uncoated region 1233 are arranged in the axial direction of the housing 110. The second uncoated region 1233 extends beyond the separator 122 towards the other end in the height direction of the secondary battery 100 and is folded towards the axis of the housing 110 to form a stacked negative tab 124.

Referring to FIG.1 to FIG. 2, the separator 122 is arranged between the positive terminal sheet 121 and the negative terminal sheet 123 to isolate the positive active material layer from the negative active material layer. Taking a lithium-ion secondary battery 100 as an example, a material of the positive current collector 1211 may be aluminum, and the positive active material layer includes a positive active material, which may be lithium cobalt oxide, lithium iron phosphate, ternary lithium, or lithium manganese oxide, etc. A material of the negative current collector 1231 may be copper, and the negative active material layer includes a negative active material, which may be carbon or silicon, etc. A base material of the separator 122 may be polypropylene (abbreviated as PP) or polyethylene (abbreviated as PE), etc. In order to protect and insulate a cell, the cell may also be covered with an insulating film, and the insulating film may be made of, for example, PP, PE, polyethylene terephthalate (abbreviated as PET), polyvinyl chloride (abbreviated as PVC), or other polymer materials.

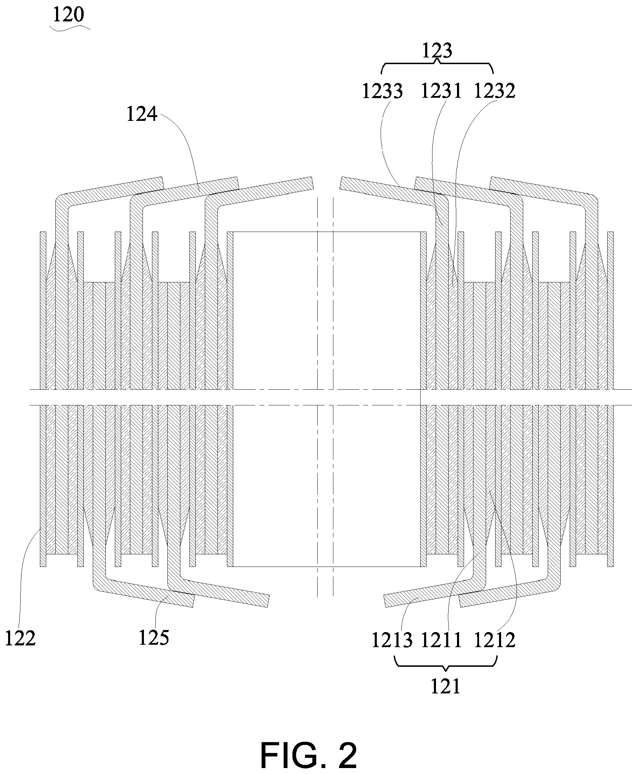

With reference to FIG.1 and FIG.2, further, in the disclosure, the positive tab 125 faces the end wall 111 or the opening 113, while the negative tab 124 faces the other end of the housing 110. In this embodiment, the positive tab 125 faces the end wall 111 and is electrically connected to the electrode terminal 140, making the electrode terminal 140 positively charged. The negative tab 124 faces the opening 113 and is electrically connected to the housing 110, making the housing 110 negatively charged. However, in other embodiments, the negative tab 124 may be connected to the electrode terminal 140, and the positive tab 125 may be connected to the housing 110.

Referring to FIG.1, the cover plate 130 is sealingly installed at the opening 113. An outer edge shape of the cover plate 130 corresponds to a shape of the opening 113 and is connected to the side wall 112 to seal the opening 113. The installation method of the cover plate 130 includes but not limited to mechanical sealing or welding sealing. In this embodiment, the cover plate 130 is sealed and plugged at the opening 113 by means of mechanical sealing.

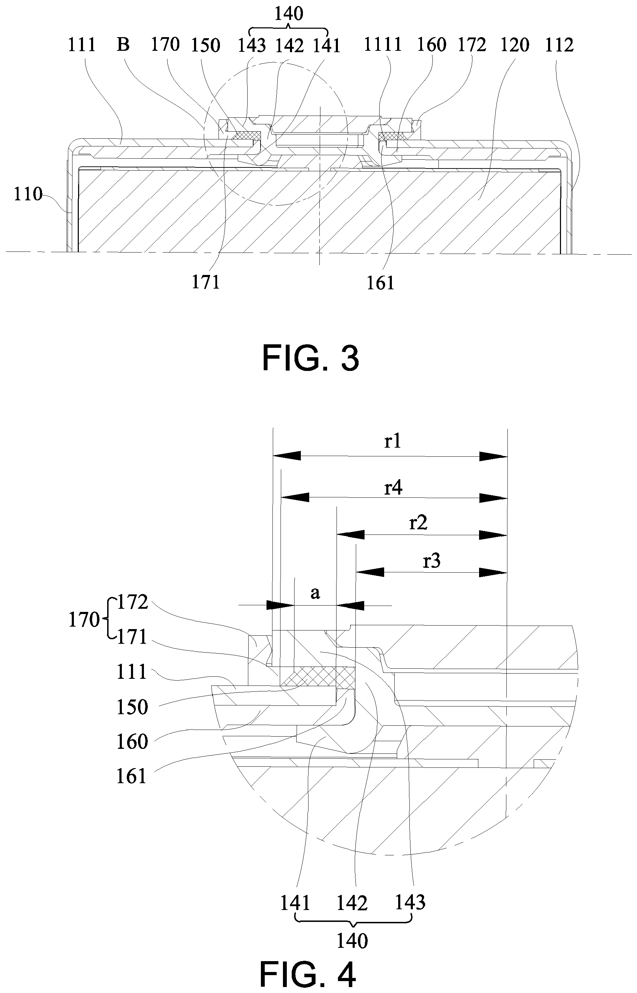

Referring to FIG. 3 to FIG. 5, the electrode terminal 140 is fixed onto the end wall 111 and is electrically connected to the electrode assembly 120. Specifically, the end wall 111 is provided with an electrode terminal hole 1111, and the electrode terminal 140 passes through and is installed in the electrode terminal hole 1111 and is insulated from the end wall 111. One end of the electrode terminal 140 facing the electrode assembly 120 passes through the end wall 111 and is electrically connected to the positive tab 125 directly or indirectly. A structural form of the electrode terminal 140 may be any suitable form that can pass through the end wall 111 and be electrically connected to the positive tab 125 of the electrode assembly 120. For instance, a cross section of the electrode terminal 140 may be circular, square, prismatic, or an irregular profile that can achieve stable conduction. A shape of the electrode terminal hole 1111 corresponds to that of the electrode terminal 140. In this embodiment, the cross section of the electrode terminal 140 is circular.

Referring to FIG. 3 to FIG. 5, the electrode terminal 140 includes a post portion 142, an outer flange 143, and an inner flange 141, and the post portion 142 passes through the electrode terminal hole 1111. A cross section of the post portion 142 may be circular, square, prismatic, or any other irregular profile that can achieve stable conduction. Considering favorable sealing and fitting effects, preferably, the post portion 142 matches the electrode terminal hole 1111, that is, the shape of the electrode terminal hole 1111 corresponds to that of the post portion 142. In this embodiment, the cross section of the post portion 142 is circular as the circular design may facilitate processing, assembly, and sealing.

Referring to FIG.3 to FIG.5, the outer flange 143 is located an outer portion of the housing 110 and extends from the post portion 142 towards an outer periphery of the end wall 111. An outer cross-section of the outer flange 143 may be circular, square, prismatic or any other irregular profile that can achieve stable conduction, which is not limited herein. The inner flange 141 is located in an inner portion of the housing 110 and extends from the post portion 142 towards the outer periphery of the end wall 111. Specifically, the inner flange 141 is connected to one end of the post portion 142 located in the inner portion of the housing 110 and extends along a side of the end wall 111 facing the inner portion of the housing 110 towards the outer edge of the end wall 111. An outer cross-section of the inner flange 141 may be circular, square, prismatic or any other irregular profile that can achieve stable conduction, which is not limited herein.

Referring to FIG. 3 to FIG. 6, the sealing member 150 is located between the electrode terminal 140 and the end wall 111. A position of the sealing member 150 between the electrode terminal 140 and the end wall 111 is not limited. The position may be arranged only between the outer flange 143 and the end wall 111, may be arrange only between the post portion 142 and the electrode terminal hole 1111, may be arranged only between the inner flange 141 and the end wall 111, or may be arranged in a combination of two or three of the above positions. As long as the sealing between the electrode terminal 140 and the end wall 111 may be achieved through an elastic member with a specific compression ratio, so as to avoid leakage between the electrode terminal 140 and the end wall 111. A material of the sealing member 150 may be any one of perfluoroalkoxy (abbreviate as PFA), polybutylene terephthalate (abbreviate as PBT), liquid crystal polymer (abbreviate as LCP), PP, polyphenylene sulfide (abbreviate as PPS), and polycarbonate (abbreviate as PC), which is not limited herein.

Considering that when a temperature of the secondary battery 100 rises, the insulating member experiences thermal shrinkage, so a slit between the electrode terminal 140 and the housing 110 expands and the sealing ring rebounds so that the sealing performance of the sealing member 150 is lowered, the range of the compression ratio w of the sealing member 150 is set to 20%≤w≤50%, such as 20%, 25%, 30%, 35%, 40%, 45%, or 50%, etc. The compression ratio of the sealing member 150 is a ratio of a difference between an initial thickness of the sealing member 150 and a thickness of the sealing member 150 after assembly compression to the initial thickness of the sealing member 150. It should be noted that the sealing member 150 is in a compressed state after assembly. Herein, the thickness of the sealing member 150 may be obtained by CT or by measuring after making a section of the secondary battery 100. The initial thickness of the sealing member 150 may be measured before installation, or it may be measured after removing the sealing member 150 from the secondary battery 100 and allowing it to rebound. This setting may not only make the sealing member 150 have an improved sealing effect at normal temperature, but also achieve the effect that when the temperature of the secondary battery 100 rises, even if the sealing member 150 rebounds, favorable sealing performance is still maintained. The technical problem of leakage is thus improved.

Referring to FIG. 3 to FIG. 5, in the secondary battery 100 provided by an embodiment of the disclosure, in a radial direction of the electrode terminal 140, a ratio of a width a of a portion of the sealing member 150 clamped between the outer flange 143 and the end wall 111 to a difference between a radius r1 of the outer flange 143 and a radius r2 of the electrode terminal hole 1111 is i, where 50%≤i≤90%, such as 50%, 55%, 60%, 65%, 70%, 75%, 80%, 85%, or 90%, etc. Because the portion of the sealing member 150 clamped between the outer flange 143 and the end wall 111 directly contacts the outer flange 143 and the end wall 111 and can be directly pressed by the outer flange 143 and the end wall 111, this portion is an effective sealing portion of the sealing ring. A portion of the difference between the radius r1 of the outer flange 143 and the radius r2 of the electrode terminal hole 1111 is a sealable portion that can be used for sealing between the outer flange 143 and the end wall 111. By setting the ratio i of a length of the effective sealing portion to a length of the sealable portion to 50%≤i≤90%, a placement space is provided for the insulating member and the sealing member 150 is allowed to have a greater effective sealing length, so that the sealing performance of the sealing member 150 is improved.

Referring to FIG. 4, in the secondary battery 100 provided by an embodiment of the disclosure, a ratio of a difference between the radius r1 of the outer flange 143 and a radius r3 of the post portion 142 to the radius r1 of the outer flange 143 is b, where 30%≤b≤50%, such as 30%, 33%, 35%, 36%, 40%, 45%, 47%, or 50%. A portion of the difference between the radius r1 of the outer flange 143 and the radius r3 of the post portion 142 is a cantilever portion of the outer flange 143 relative to the post portion 142. By setting the ratio b in the range of 30%≤b≤50%, a size of the cantilever is shorter, and a larger sealing space is provided for the sealing ring. In this setting, the strength of the cantilever is improved, an edge of the outer flange 143 is not prone to warping, and a more constant pressing force is provided to the sealing member 150, so that the sealing performance of the sealing member 150 is further improved.

Referring to FIG. 3 to FIG. 6, in the secondary battery 100 provided by an embodiment of the disclosure, the secondary battery 100 further includes inner insulator 160 surrounding the post portion 142. A material of the inner insulator 160 may be any one of PP, PPS, PC, PFA, PBT, and LCP, which is not limited. The inner insulator 160 includes a first insulator 161 located between the electrode terminal hole 1111 and the post portion 142. In the radial direction of the electrode terminal 140, a thickness c of the first insulator 161 is in a range of 0.4mm≤c≤0.9mm, such as 0.4mm, 0.5mm, 0.6mm, 0.7mm, 0.8mm, or 0.9mm, etc. The inner insulator 160 is used to isolate the end wall 111 and the electrode assembly 120, as well as to isolate the end wall 111 and the electrode terminal 140. The first insulator 161 is mainly used to isolate the end wall 111 and the electrode terminal 140. By setting the thickness of the first insulator 161 to be equal to or greater than 0.4mm, the pressure resistance performance of the first insulator 161 is improved. Further, by limiting the thickness of the first insulator 161 to be equal to or less than 0.9mm, the effective sealing length of the sealing member 150 is increased, so that the sealing performance of the sealing member 150 is improved.

Referring to FIG. 3 to FIG. 6, considering that when the compression ratio of the sealing member 150 increases, the corresponding deformation of the sealing member 150 may also increase, in the secondary battery 100 provided by an embodiment of the disclosure, in a direction in which the electrode terminal 140 passes through, the first insulator 161 is lower than a side of the electrode terminal hole 1111 close to the outer flange 143 and forms a first accommodation groove 1611 for accommodating the sealing member 150. By arranging of the first accommodating groove 1611, greater deformation of the sealing member 150 may be accommodated, so that when high temperature causes the sealing member 150 to rebound, the sealing member 150 may still have a higher compression ratio. Further, a depth of the first accommodating groove 1611 is e, where 0.05mm≤e≤0.2mm, such as 0.05mm, 0.07mm, 0.1mm, 0.12mm, 0.15mm, 0.17mm, or 0.2mm. The depth of the first accommodating groove 1611 being equal to or greater than 0.05mm can provide a certain accommodating space for the sealing member 150. Further, the limitation of the depth being equal to or less than 0.2mm may achieve an improved isolation and insulation effect of the first insulator 161 between the end wall 111 and the electrode terminal 140, and the first insulator 161 is allowed to exhibit improved strength.

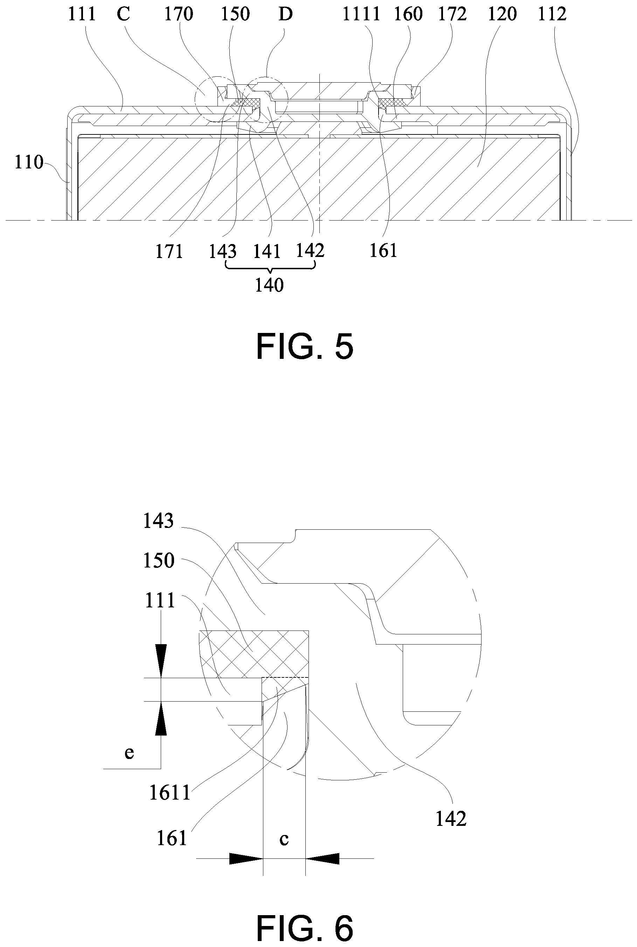

Referring to FIG. 5 to FIG. 6, considering that when the sealing member 150 is filled unevenly, a slit may be provided between the end wall 111 and the post portion 142, and there is still a risk of short circuit. In the secondary battery 100 provided by an embodiment of the disclosure, in the direction in which the electrode terminal 140 passes through, an inner edge and an outer edge of the first insulator 161 on a side close to the outer flange 143 have different heights. A bottom surface of the first accommodating groove 1611 is set as an inclined surface. In this way, the first insulator 161 may have a higher height without reducing the accommodating space of the first accommodating groove 1611, so that an improved isolation and insulation effect is obtained. A side of the bottom surface close to the electrode terminal hole 1111 may be lower than a side close to the post portion 142, or it may be higher than a side close to the post portion 142. In both of these approaches, the sealing member 150 is allowed to have a higher height in the direction in which the electrode terminal 140 passes through, so that the sealing effect of the sealing member 150 is improved.

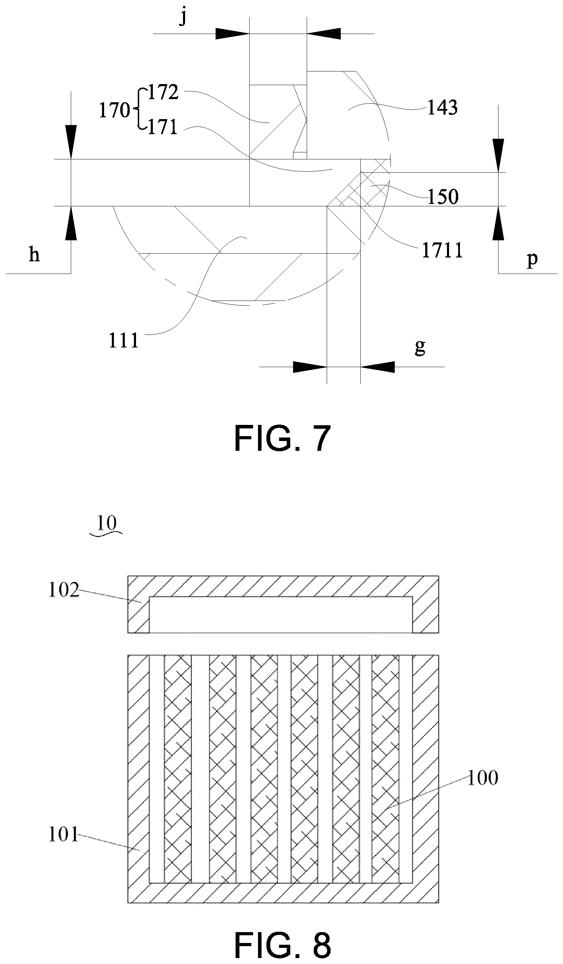

Considering that a wall thickness of the end wall 111 is relatively thin, in the secondary battery 100 provided by an embodiment of the disclosure, referring to FIG. 5 and FIG. 7, in the direction in which the electrode terminal 140 passes through, a distance from the inner edge to the outer flange 143 is greater than a distance from the outer edge to the outer flange 143. In this setting, a larger contact area between the first insulator 161 and the electrode terminal hole 1111 is achieved, so that the pressing between the end wall 111 and the first insulator 161 is stable.

Referring to FIG. 5 and FIG. 7, in the secondary battery 100 provided by an embodiment of the disclosure, the secondary battery 100 further includes outer insulator 170 including a second insulator 171 clamped between the outer flange 143 and the end wall 111. In the radial direction of the electrode terminal 140, considering the risk of short circuit between the outer flange 143 and the end wall 111 when the sealing member 150 is filled unevenly, in the secondary battery 100 provided by an embodiment of the disclosure, a side of the second insulator 171 close to the sealing member 150 is provided with a chamfer to form a second accommodating groove 1711 for accommodating the sealing member 150, so that a filling space of the sealing member 150 is increased. In addition, by setting the second accommodating groove 1711 in the form of a chamfer, the risk of short circuit is prevented from occurring between the outer flange 143 and the end wall 111 when the sealing member 150 is filled unevenly. The chamfer may be arranged on an edge of the second insulator 171 close to the outer flange 143 or may be arranged on an edge close to the end wall 111. In this embodiment, the chamfer is arranged on the edge of the second insulator 171 close to the end wall 111, so that a width of the side of the second insulator 171 close to the outer flange 143 is greater than a width of the side close to the end wall 111. In this way, a larger contact surface between the second insulator 171 and the outer flange 143 is achieved, and the pressing force of the outer flange 143 on the second insulator 171 is improved.

Further, in the radial direction of the electrode terminal 140, a length of the chamfer is g, and in the direction in which the electrode terminal 140 passes through, a length of the chamfer is p, where p≥g. p≥g means that the length of the chamfer in the radial direction is less than or equal to its length in the axial direction. This setting ensures that when pressure is applied from the outer flange 143 to the second insulator 171, the outer insulator 170 is not easily detached. Preferably, 0.2mm≤g≤0.6mm, the value of g may be, for example: 0.2mm, 0.25mm, 0.3mm, 0.35mm, 0.4mm, 0.45mm, 0.5mm, 0.55mm or 0.6mm, etc. g≥0.2mm means that a maximum depth of the second accommodating groove 1711 is greater than or equal to 0.2mm, so that a certain accommodation space is provided for the sealing member 150. g≤0.6mm means that the maximum depth of the second accommodating groove 1711 is less than or equal to 0.6mm. Through this limitation, the second insulator 171 may not be easily detached, an improved isolation and insulation effect is provided for the end wall 111 and the outer flange 143, and the second insulator 171 is allowed to have higher strength. In this embodiment, the value of g is 0.3mm, and the value of p is 0.5mm. The outer insulator 170 in this embodiment may provide an improved isolation and insulation effect and also provide a certain accommodating space for the sealing member 150, so the sealing effect is improved.

Referring to FIG. 5 and FIG. 7, in the secondary battery 100 provided by an embodiment of the disclosure, in the direction in which the electrode terminal 140 passes through, an inner edge radius of a side of the second insulator 171 where the chamfer is arranged is r4, and in the radial direction of the electrode terminal 140, r1-r4≥0.3mm. In this embodiment, first, the inner edge of the side of the second insulator 171 provided with the chamfer is located radially inward of the outer edge of the outer flange 143, and r1-r4≥0.3mm is further limited. This means that in the radial direction of the electrode terminal 140, at least 0.3mm width of the second insulator 171 is directly clamped by the outer flange 143 and the end wall 111. In some embodiments, the size of r1-r4 may be 0.3mm, 0.4mm, and 0.5mm. In this setting, the stability of the outer insulator 170 being clamped by the outer flange 143 and the end wall 111 is improved, so on one hand, the insulation effect between the outer flange 143 and the end wall 111 is improved, and on the other hand, the improved stability of the outer insulator 170 is also beneficial to the sealing effect of the sealing member 150.

Referring to FIG. 5 and FIG. 7, in the secondary battery 100 provided by an embodiment of the disclosure, in the direction in which the electrode terminal 140 passes through, a thickness of the second insulator 171 is h, where 0.5mm≤h≤1mm, such as 0.5mm, 0.6mm, 0.7mm, 0.8mm, 0.9mm, or 1mm. In this setting of the thickness h≤1mm of the second insulator 171, the slit between the outer flange 143 and the end wall 111 is decreased, so necessary conditions for improving the compression ratio of the sealing member 150 are provided. The setting of h≥0.5mm may ensure that the insulation effect of the second insulator 171 is not affected.

Referring to FIG. 5 and FIG. 7, in the secondary battery 100 provided by an embodiment of the disclosure, the outer insulator 170 further includes a third insulator 172 integrally formed with the second insulator 171. The third insulator 172 is connected to an outer periphery of the second insulator 171 and surrounds an outer periphery of the outer flange 143. In the radial direction of the electrode terminal 140, a width of the third insulator 172 is j, and j≥0.5mm, 0.5mm, 0.6mm, 0.7mm, 0.8mm, 0.9mm, or 1mm, so as to ensure a sufficient creepage distance.

Referring to FIG. 8, the disclosure further provides a battery pack 10 including the secondary battery 100 according to any one of the above. In the battery pack 10 provided by an embodiment of the disclosure, the battery pack 100 includes a box 101, a box cover 102, and a plurality of secondary batteries 100. The plurality of secondary batteries 100 are placed in the box 101 and are connected in series, in parallel, or in a mixed manner of series and parallel. The box cover 102 covers the box 101 to protect the secondary batteries 100. It should be noted that in addition to the secondary battery 100 provided by the disclosure, the battery pack 10 may also include a thermal management system of the battery pack 10, a circuit board, and other parts. The battery pack 10 may be a battery module, a battery pack, an energy storage cabinet, etc., and description thereof is not provided herein.

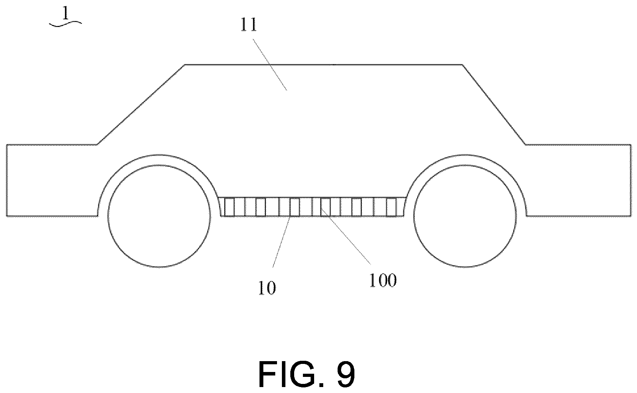

Referring to FIG. 9, the disclosure further provides an electronic apparatus 1 including the aforementioned battery pack 10. A working portion 11 is electrically connected to the battery pack 10 to obtain power support. As an embodiment, the electronic apparatus 1 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery pack 10 is arranged at the bottom of the vehicle body and provides electrical energy support for the driving of the vehicle or the operation of electrical components in the vehicle. However, in other embodiments, the electronic apparatus 1 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 11 may be a unit component capable of obtaining the electric energy of the battery pack 10 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1 is not particularly limited in the embodiments of the disclosure.

In the secondary battery of the disclosure, the compression ratio w of the sealing member is set in the range of 20%≤w≤50%. This setting may not only make the sealing member have an improved sealing effect at normal temperature, but also achieve the effect that when the temperature of the secondary battery rises, even if the sealing member rebounds, favorable sealing performance is still maintained. The technical problem of leakage is thus improved. Therefore, some practical problems in the related art are effectively overcome, so that the disclosure exhibits high utilization value and use significance. The above-mentioned embodiments only illustrate the principles and effects of the disclosure, but are not intended to limit the disclosure.

Therefore, some practical problems in the related art are effectively overcome, so that the disclosure exhibits high utilization value and use significance.

## Claims

1. A secondary battery (100), comprising:
a housing (110) comprising an end wall (111) and a side wall (112) surrounding the end wall (111), wherein the end wall (111) is provided with an electrode terminal hole (1111);
an electrode assembly (120) arranged in the housing (110);
an electrode terminal (140) passing through the end wall (111) and electrically connected to the electrode assembly (120); and
a sealing member (150) located between the electrode terminal (140) and the end wall (111),
wherein a compression ratio w of the sealing member (150) is in a range of: 20%≤w≤50%.

2. The secondary battery (100) according to claim 1, wherein the electrode terminal (140) comprises a post portion (142), an outer flange (143), and an inner flange (141), the post portion (142) passes through the electrode terminal hole (1111), the outer flange (143) is located on an outer portion of the housing (110) and extends from the post portion (142) towards an outer periphery of the end wall (111), the inner flange (141) is located in an inner portion the housing (200) and extends from the post portion (142) towards the outer periphery of the end wall (111), the sealing member (150) is located between the outer flange (143) and the end wall (111), in a radial direction of the electrode terminal (140), a ratio of a width a of a portion of the sealing member (150) clamped between the outer flange (143) and the end wall (112) to a difference between a radius r1 of the outer flange (143) and a radius r2 of the electrode terminal hole (1111) is i, where 50%≤i≤90%.

3. The secondary battery (100) according to claim 2, wherein a ratio of a difference between the radius r1 of the outer flange (143) and a radius r3 of the post portion (142) to the radius r1 of the outer flange (143) is b, where 30%≤b≤50%.

4. The secondary battery (100) according to claim 2, wherein the secondary battery (100) further comprises inner insulator (160) comprising a first insulator (161) located between the electrode terminal hole (1111) and the post portion (142), and in the radial direction of the electrode terminal (140), a thickness c of the first insulator (161) is in a range of 0.4mm≤c≤0.9mm.

5. The secondary battery (100) according to claim 4, wherein in a direction in which the electrode terminal (140) passes through, the first insulator (161) is lower than a side of the electrode terminal hole (1111) close to the outer flange (143) and forms a first accommodating groove (1611) for accommodating the sealing member (150), and a depth of the first accommodating groove (1611) is e, where 0.05mm≤e≤0.2mm.

6. The secondary battery (100) according to claim 5, wherein in the direction in which the electrode terminal (140) passes through, an inner edge and an outer edge of the first insulator (161) on a side close to the outer flange (143) have different heights.

7. The secondary battery (100) according to claim 6, wherein in the direction in which the electrode terminal (140) passes through, a distance from the inner edge to the outer flange (143) is greater than a distance from the outer edge to the outer flange (143).

8. The secondary battery (100) according to claim 2, wherein the secondary battery (100) further comprises outer insulator (170) comprising a second insulator (171) clamped between the outer flange (143) and the end wall (111), a chamfer is arranged on a side of the second insulator (171) close to the sealing member (150) to form a second accommodating groove (1711) for accommodating the sealing member (150), in the radial direction of the electrode terminal (140), a length of the chamfer is g, and in a direction in which the electrode terminal (140) passes through, a length of the chamfer is p, where p≥g and 0.2mm≤g≤0.6mm.

9. The secondary battery (100) according to claim 8, wherein in the direction in which the electrode terminal (140) passes through, an inner edge radius of a side of the second insulator (171) where the chamfer is arranged is r4, and in the radial direction of the electrode terminal (140), r1-r4≥0.3mm.

10. The secondary battery (100) according to claim 8, wherein in the direction in which the electrode terminal (140) passes through, a thickness of the second insulator (171) is h, where 0.5mm≤h≤1mm.

11. The secondary battery (100) according to claim 8, wherein the outer insulator (170) further comprises a third insulator (172) integrally formed with the second insulator (171), the third insulator (172) is connected to an outer periphery of the second insulator (171) and surrounds an outer periphery of the outer flange (143), in the radial direction of the electrode terminal (140), a width of the third insulator (172) is j, and j≥0.5mm.

12. A battery pack (10), comprising the secondary battery (100) according to any one of claim 1 to claim 11.
